# EUROPEAN PATENT APPLICATION

(11) **EP 4 826 850 A1**
(43) Date of publication of application: **21.10.2026**
(21) Application number: 25913359.3
(22) Date of filing: 08.08.2025
(51) Int. Cl.: H01M 10/6554, H01M 50/289, H01M 10/625, H01M 10/6556, H01M 10/613

(54) **BATTERY PACK AND VEHICLE COMPRISING SAME**

(30) Priority: 23.12.2024 KR 20240194401
(71) Applicant: LG Energy Solution, Ltd., Seoul 07335 (KR)
(72) Inventor: KIM, Seon-Woo, Daejeon 34122 (KR)
(74) Representative: Plasseraud IP
(86) International application number: PCT/KR2025/012033
(87) International publication number: WO 2026/141828

(57) **Abstract**

Disclosed is a battery pack and a vehicle including the same. The battery pack includes a battery module having a plurality of battery cells; a pack case configured to accommodate the plurality of battery modules; and a cooling member accommodated in the pack case and configured to contact the plurality of battery modules, wherein some of the plurality of battery modules are in contact with one surface of the cooling member, and the remainder of the plurality of battery modules are in contact with the other surface of the cooling member.

## Description

### TECHNICAL FIELD

This application is based on and claims priority from Korean Patent Application No. 10-2024-0194401, filed on December 23, 2024, with the Korean Intellectual Property Office, the disclosure of which is incorporated herein in its entirety by reference.

The present disclosure relates to a battery pack and a vehicle including the same, and more specifically, to a battery pack capable of improving cooling efficiency, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries may include a battery module that includes a module case capable of protecting battery cells and a plurality of battery cells stacked and inserted into the module case, and a battery pack that includes a plurality of battery modules.

The battery pack includes a pack case, and a plurality of battery modules are arranged inside the pack case. In addition, the battery modules may be configured to contact a cooling plate for cooling of the battery modules.

However, in the conventional technology, the battery module is coupled to only come into contact with the upper side of the cooling plate, so the cooling efficiency deteriorates.

### DISCLOSURE

### Technical Problem

Therefore, the present disclosure is directed to providing a battery pack that may improve cooling efficiency by allowing a plurality of battery modules to contact one surface and the other surface of a cooling member, respectively, and a vehicle including the same.

In addition, the present invention is directed to providing a battery pack that may prevent a thermal event such as fire from occurring by improving the cooling efficiency of the battery module, and a vehicle including the same.

In addition, the present invention is directed to providing a battery pack that may ensure the stability of the battery module and the battery pack by preventing fire, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a battery module having a plurality of battery cells; a pack case configured to accommodate the plurality of battery modules; and a cooling member accommodated in the pack case and configured to contact the plurality of battery modules, wherein some of the plurality of battery modules are in contact with one surface of the cooling member, and the remainder of the plurality of battery modules are in contact with the other surface of the cooling member.

In an embodiment, the cooling member may include a cooling plate with which the plurality of battery modules are in contact; and a cooling medium flow path formed at an inner side of the cooling plate.

In an embodiment, some of the plurality of battery modules may be coupled to an upper surface of the cooling plate, and the remaining battery modules may be coupled to a lower surface of the cooling plate.

In an embodiment, the battery module may include a module case in which the plurality of battery cells are accommodated, the module case may include an upper module case and a lower module case, and the lower module case may be larger than the upper module case.

In an embodiment, the lower module case may have a protrusion that protrudes further in at least one of right and left directions than the upper module case, the protrusion may have a first coupling hole in which a fastening member is coupled, and the cooling member may have a second coupling hole formed at a position corresponding to the first coupling hole.

In an embodiment, the cooling member may have a partition wall configured to partition the battery modules, and each of the plurality of battery modules may be disposed inside the partition wall and be in contact with the cooling member.

In an embodiment, the partition wall may include an upper partition wall formed at an upper side of the cooling member and a lower partition wall formed at a lower side of the cooling member.

In an embodiment, the partition wall may be formed to protrude from the cooling member, the partition wall may include a first partition wall and a second partition wall positioned adjacent to the first partition wall, and one battery module among the plurality of battery modules may be arranged between the first partition wall and the second partition wall.

In an embodiment, the battery module may be interposed and coupled between the first partition wall and the second partition wall, and the first partition wall and the second partition wall may be configured to guide movement of the battery module.

In an embodiment, the battery module may include a module case in which the plurality of battery cells are accommodated, the module case may include an upper module case and a lower module case, the lower module case may have a protrusion formed to protrude further in at least one of right and left directions than the upper module case, and the protrusion may be welded in contact with the partition wall.

In an embodiment, among the plurality of battery modules, a battery module disposed between the upper partition walls and a battery module disposed between the lower partition walls may be disposed symmetrically to each other.

In an embodiment, the battery module may include a module case in which the plurality of battery cells are accommodated, the module case may include an upper module case and a lower module case, the lower module case may have a protrusion formed to protrude further in at least one of right and left directions than the upper module case, and the partition wall may have a guide groove or a guide projection formed along the partition wall, and the protrusion may have a guide projection or a guide groove formed to correspond to the guide groove or the guide projection so as to be coupled to and slide along the guide groove or the guide projection of the partition wall.

In an embodiment, the cooling medium flow path may include an inlet and an outlet, and the inlet and the outlet may be formed at opposite sides of the cooling plate.

In an embodiment, the cooling member may have a partition wall formed to partition the battery modules, each of the plurality of battery modules may be disposed inside the partition wall to contact the cooling member, and the inlet and the outlet may be formed in the partition wall.

In an embodiment, the cooling medium flow path may include a first flow path disposed inside the partition wall along the partition wall; and a second flow path extending from the first flow path toward the battery cell.

Meanwhile, according to another aspect of the present disclosure, there may be provided a vehicle including at least one battery pack described above.

### Advantageous Effects

The embodiments of the present disclosure have the effect of improving cooling efficiency by allowing a plurality of battery modules to contact one surface and the other surface of the cooling member, respectively.

In addition, the present disclosure has the effect of improving the cooling efficiency of the battery module, thereby preventing a thermal event such as fire from occurring.

In addition, the present disclosure has the effect of ensuring the stability of the battery module and the battery pack by preventing fire.

However, the effects that can be obtained through the present disclosure are not limited to the above, and other technical effects are not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure.
FIG. 2 is an exploded perspective view showing the battery pack according to an embodiment of the present disclosure.
FIG. 3 is a drawing taken along the direction A of FIG. 2.
FIG. 4 is a perspective view showing a battery pack according to an embodiment of the present disclosure, in which a battery module is separated from a cooling member.
FIGS. 5 and 6 are drawings for illustrating the process of attaching a battery module to the upper and lower sides of a cooling member, respectively.
FIGS. 7 and 8 are drawings for illustrating modified embodiments of FIGS. 5 and 6.
FIG. 9 is a drawing showing a cooling medium flow path formed in a cooling plate in the battery pack according to an embodiment of the present disclosure.
FIGS. 10 and 11 are drawings showing a cooling medium flow path formed in a cooling plate according to a modified embodiment of FIG. 9.
FIG. 12 is a drawing showing a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

Meanwhile, the common content described in one embodiment of the present disclosure may also be applied to other embodiments. For example, the content of the second embodiment common to the description in the first embodiment may be replaced with the description of the first embodiment, but the common content may also be applied to the second embodiment. In addition, the content described in the second embodiment that is applicable to the first embodiment may also be applied to the first embodiment. The same applies to other embodiments.

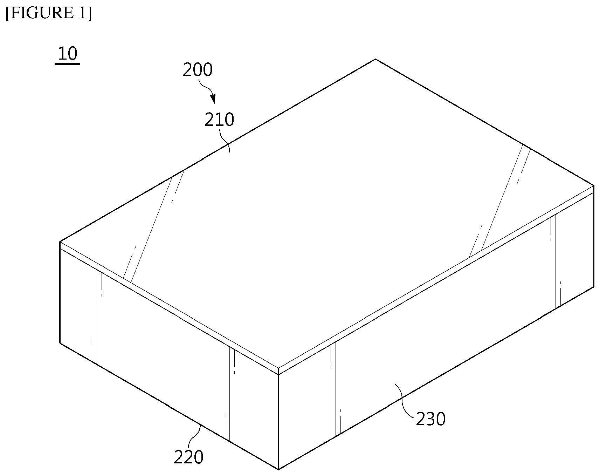

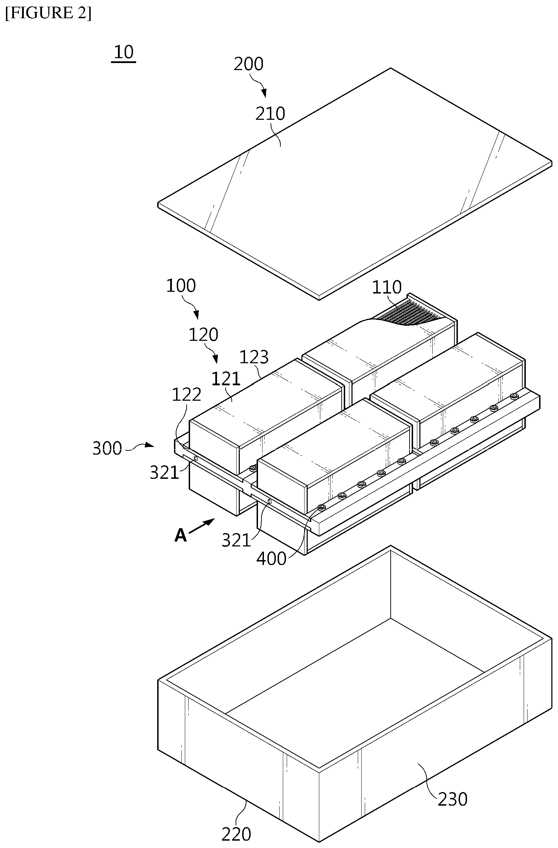

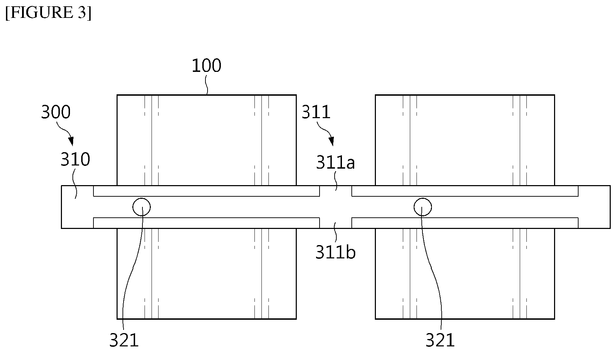

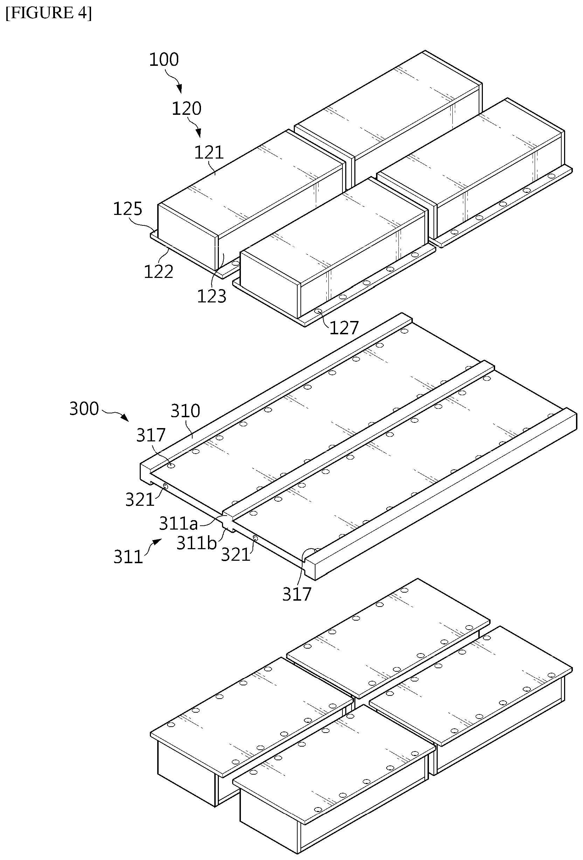

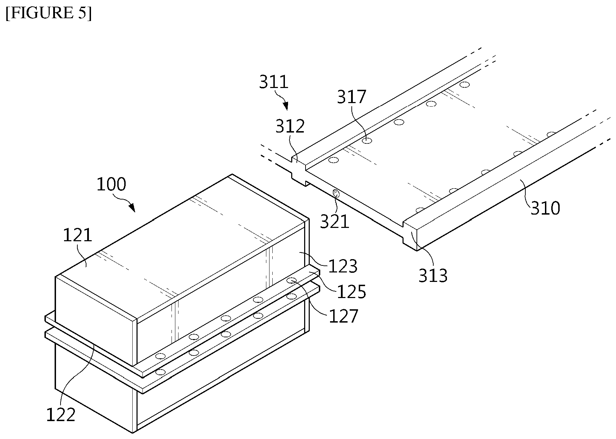

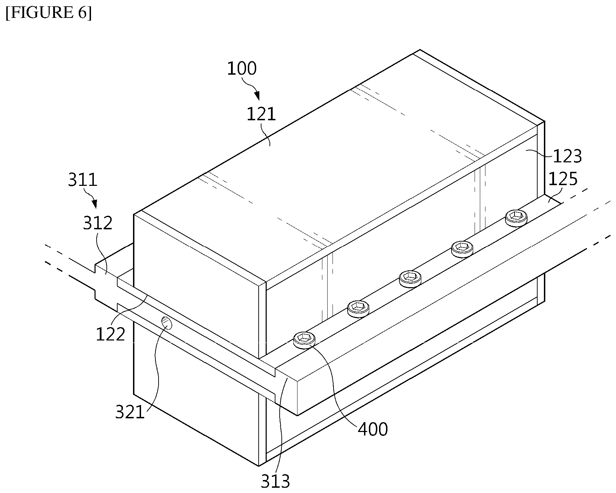

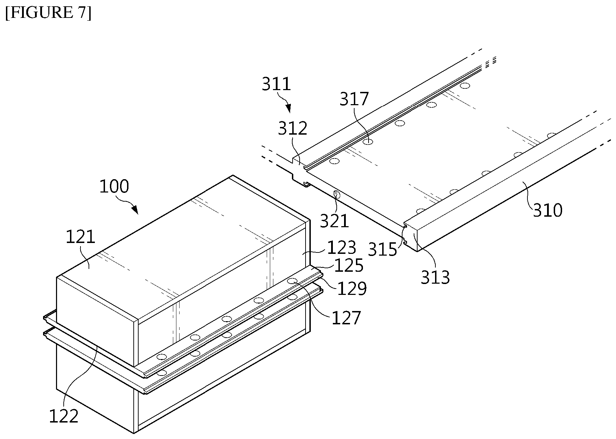

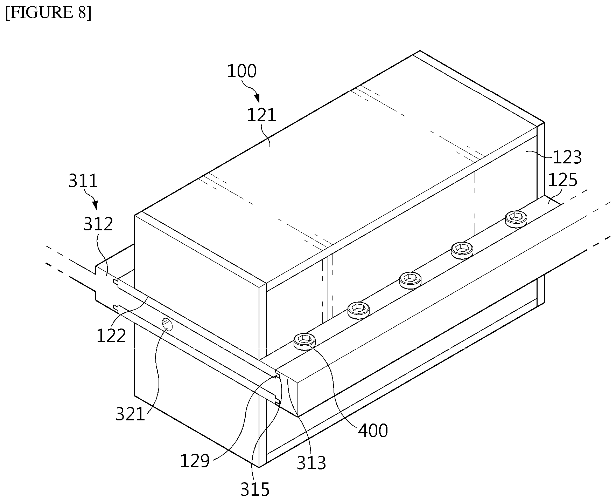

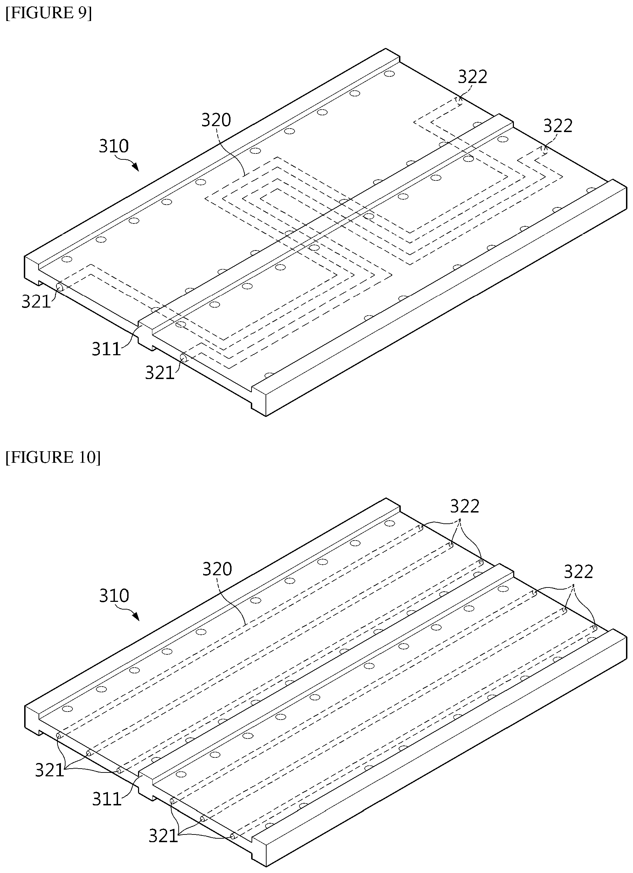

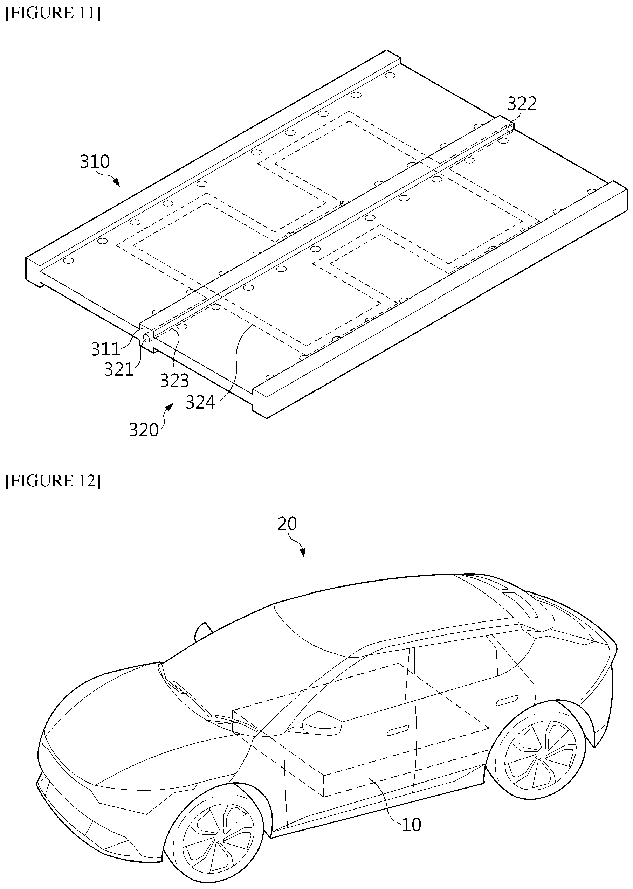

FIG. 1 is a perspective view showing a battery pack according to an embodiment of the present disclosure, FIG. 2 is an exploded perspective view showing the battery pack according to an embodiment of the present disclosure, FIG. 3 is a drawing taken along the direction A of FIG. 2, FIG. 4 is a perspective view showing a battery pack according to an embodiment of the present disclosure, in which a battery module is separated from a cooling member, FIGS. 5 and 6 are drawings for illustrating the process of attaching a battery module to the upper and lower sides of a cooling member, respectively, FIGS. 7 and 8 are drawings for illustrating modified embodiments of FIGS. 5 and 6, FIG. 9 is a drawing showing a cooling medium flow path formed in a cooling plate in the battery pack according to an embodiment of the present disclosure, and FIGS. 10 and 11 are drawings showing a cooling medium flow path formed in a cooling plate according to a modified embodiment of FIG. 9.

Referring to FIGS. 1 and 2, the battery pack 10 according to an embodiment of the present disclosure includes a battery module 100, a pack case 200, and a cooling member 300.

The battery module 100 may be provided in plurality, so that the plurality of battery modules 100 are arranged in various ways. For example, as in FIG. 2, the battery modules 100 may be arranged in a horizontal direction and a vertical direction, but are not limited thereto.

The battery module 100 may include a plurality of battery cells 110 and a module case 120.

The plurality of battery cells 110 may be configured to be stacked. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 110, or the positive electrode lead and the negative electrode lead may be arranged in the same direction with respect to the longitudinal direction of the battery cell 110.

Referring to FIG. 2, the plurality of battery cells 110 are accommodated in the module case 120. The module case 120 surrounds the plurality of battery cells 110, thereby protecting the battery cells 110 from external vibrations or shocks.

The module case 120 may be formed in a shape corresponding to the shape of the stack in which the plurality of battery cells 110 are stacked. For example, if the stack in which the plurality of battery cells 110 are stacked is formed in a hexahedral shape, the module case 120 may also be provided in a hexahedral shape corresponding thereto. However, the present disclosure is not limited thereto.

Here, the module case 120 may include an upper module case 121, a lower module case 122, and a side module case 123. In addition, for example, the upper module case 121 of the module case 120 may be formed into a square shape.

In addition, the module case 120 may be manufactured by, for example, bending a metal plate, and thus the module case 120 may be manufactured integrally.

If the module case 120 is manufactured integrally, the coupling process is simplified and becomes easier. Alternatively, the module case 120 may be provided in a separate form and coupled by welding, etc. However, the material of the module case 120 is not limited to a metal material.

Referring to FIG. 4, the lower module case 122 may be formed to be larger than the upper module case 121. For example, the lower module case 122 may have a protrusion 125 formed to protrude further in at least one of the left and right directions than the upper module case 121, thereby forming the lower module case 122 to be larger than the upper module case 121.

For convenience of explanation, the following description focuses on the case where the protrusion 125 is formed on both the left and right sides of the lower module case 122.

In addition, a first coupling hole 127 to which a fastening member 400 is coupled may be formed in the protrusion 125. In addition, a second coupling hole 317 may be formed in the cooling plate 310 of the cooling member 300 at a position corresponding to the first coupling hole 127.

As in FIG. 2, if the battery module 100 is inserted into the cooling plate 310, the fastening member 400 such as a screw, a bolt, and a nut may be coupled to the first coupling hole 127 and the second coupling hole 317 to fix the battery module 100 to the cooling plate 310.

Referring to FIG. 2, a plurality of battery modules 100 are accommodated in the pack case 200. The pack case 200 may be configured to include, for example, an upper pack case 210, a lower pack case 220, and a side pack case 230.

Referring to FIG. 2, the cooling member 300 is accommodated in the pack case 200, and is in contact with the plurality of battery modules 100. Here, some of the plurality of battery modules 100 are in contact with one surface of the cooling member 300, and the remainder of the plurality of battery modules 100 are in contact with the other surface of the cooling member 300.

For example, some battery modules 100 among the plurality of battery modules 100 may be in contact with the upper surface of the cooling plate 310 of the cooling member 300, and the remaining battery modules 100 among the plurality of battery modules 100 may be in contact with the lower surface of the cooling plate 310 of the cooling member 300.

Referring to FIGS. 2 and 3, four battery modules 100 are in contact with the upper surface of the cooling member 300, and the other four battery modules 100 are in contact with the lower surface of the cooling member 300, but this is only one embodiment, and the number of battery modules 100 in contact with the cooling member 300 may vary.

Referring to FIG. 9, the cooling member 300 may include a cooling plate 310 and a cooling medium flow path 320. The cooling plate 310 is configured to be in contact with the plurality of battery modules 100 as in FIGS. 2 and 3.

In addition, the cooling medium flow path 320 is formed at the inner side of the cooling plate 310 and is configured to allow various types of cooling mediums to move.

Referring to FIG. 9, the cooling medium flow path 320 may include an inlet 321 and an outlet 322. That is, the inlet 321 and the outlet 322 may be formed in the cooling plate 310. Here, the inlet 321 and the outlet 322 may be formed in various parts of the cooling plate 310, and, for example, may be formed at opposite sides of the cooling plate 310, respectively.

That is, the cooling medium introduced through the inlet 321 may be discharged to the outside of the cooling plate 310 through the outlet 322 formed in the opposite direction. In addition, the cooling medium flow path 320 is formed in a bent shape.

If the inlet 321 and the outlet 322 are formed at opposite sides of the cooling plate 310 in this way, the temperature deviation of the battery module 100 is reduced compared to the case where both the inlet 321 and the outlet 322 are formed at the same side of the cooling plate 310.

Referring to FIG. 10 as a modified embodiment for FIG. 9, the inlet 321 and the outlet 322 are formed at opposite sides of the cooling plate 310, and the cooling medium flow path 320 is formed in a straight line.

If the cooling medium flow path 320 is formed in a straight shape in this way, the movement speed of the cooling medium increases, which has the effect in that the temperature deviation of the cooling medium is not large at the inlet 321 and the outlet 322. If the temperature deviation of the cooling medium is not large, the temperature may be maintained uniformly for the plurality of battery modules 100.

Referring to FIG. 11 as a modified embodiment for FIG. 9, a partition wall 311 may be formed in the cooling plate 310. In addition, the inlet 321 and the outlet 322 may be formed in the partition wall 311. The partition wall 311 will be described in detail later.

Here, the cooling medium flow path 320 may include a first flow path 323 and a second flow path 324. The first flow path 323 is arranged inside the partition wall 311 along the partition wall 311. Also, the second flow path 324 extends from the first flow path 323 toward the battery cell 110. This structure has the effect of enabling uniform cooling of the battery module 100.

Referring to FIG. 4, a partition wall 311 for partitioning the battery module 100 may be formed on the cooling plate 310 of the cooling member 300. In addition, referring to FIGS. 2 and 6 together, each of the plurality of battery modules 100 may be disposed inside the partition wall 311 and be in contact with the cooling plate 310 of the cooling member 300.

Here, the partition wall 311 may be formed to protrude from the cooling plate 310 of the cooling member 300. Referring to FIGS. 5 and 6, the partition wall 311 may include a first partition wall 312 and a second partition wall 313 disposed adjacent to the first partition wall 312, and in this case, any one of the plurality of battery modules 100 may be disposed between the first partition wall 312 and the second partition wall 313.

Referring to FIGS. 5 and 6, the battery module 100 may be interposed and coupled between the first partition wall 312 and the second partition wall 313. In this case, the first partition wall 312 and the second partition wall 313 may be configured to guide the movement of the battery module 100.

As described above, the lower module case 122 may have a protrusion 125 formed to protrude further in at least one of the left and right directions than the upper module case 121, and thus the lower module case 122 may be larger than the upper module case 121.

In addition, referring to FIG. 5, the protrusion 125 formed on the lower module case 122 of the battery module 100 is interposed between the first partition wall 312 and the second partition wall 313, and if the battery module 100 is pressurized after that, the protrusion 125 of the lower module case 122 may move along the first partition wall 312 and the second partition wall 313 and be inserted as in FIG. 6.

Here, as described above, if the battery module 100 is inserted into the cooling plate 310, a fastening member 400 such as a screw, a bolt, and a nut may be coupled to the first coupling hole 127 (see FIG. 4) formed in the protrusion 125 and the second coupling hole 317 (see FIG. 4) formed in the cooling plate 310 to fix the battery module 100 to the cooling plate 310.

Alternatively, the protrusion 125 of the lower module case 122 may be welded in contact with the first partition wall 312 and the second partition wall 313 of the cooling plate 310.

Alternatively, the protrusion 125 of the lower module case 122 may be fixed to the cooling plate 310 by the fastening member 400 such as a bolt and a nut and then bonded by welding.

That is, the battery pack 10 according to an embodiment of the present disclosure may fix the battery module 100 and the cooling plate 310 only with the fastening member 400, or may fix the battery module 100 and the cooling plate 310 only by welding, or may fasten the battery module 100 and the cooling plate 310 through the fastening member 400 and then completely fix the battery module 100 and the cooling plate 310 by boding them by welding.

Referring to FIG. 4, the partition wall 311 may include an upper partition wall 311a formed at the upper side of the cooling plate 310 of the cooling member 300, and a lower partition wall 311b formed at the lower side of the cooling plate 310 of the cooling member 300.

In addition, referring to FIG. 3, among the plurality of battery modules 100, the battery module 100 arranged between the upper partition walls 311a and the battery module 100 arranged between the lower partition walls 311b may be arranged symmetrically to each other. However, the present disclosure is not limited thereto.

Referring to FIGS. 7 and 8, a guide groove 315 or a guide projection (not shown) may be formed in the partition wall 311 along the partition wall 311. In addition, a guide projection 129 or a guide groove (not shown) formed to correspond to the guide groove 315 or the guide projection (not shown) of the partition wall 311 so as to slide in conjunction with the guide groove 315 or the guide projection (not shown) of the partition wall 311 may be on the protrusion 125.

That is, in FIGS. 7 and 8, a guide groove 315 is formed in the partition wall 311, a guide projection 129 is formed on the protrusion 125, and the guide projection 129 of the protrusion 125 is coupled to the guide groove 315 of the partition wall 311 and slides so that the battery module 100 may be inserted into the cooling plate 310.

If the guide groove 315 is formed in the partition wall 311 and the guide projection 129 is formed on the protrusion 125 in this way, the battery module 100 may be easily inserted into and mounted in the cooling plate 310.

However, as a modified embodiment, a guide projection (not shown) may be formed on the partition wall 311, and a guide groove (not shown) may be formed in the protrusion 125.

The embodiments of the present disclosure have the effect of improving the cooling efficiency by allowing the plurality of battery modules 100 to contact one surface and the other surface of the cooling member 300, respectively.

In addition, the present disclosure has the effect of improving the cooling efficiency of the battery module 100, thereby preventing a thermal event such as fire from occurring.

In addition, the present disclosure has the effect of preventing fire and ensuring the stability of the battery module 100 and the battery pack 10.

In addition, the temperature deviation between the inlet 321 and the outlet 322 may be decreased by reducing the area of the cooling plate 310 and the length of the cooling medium flow path 320.

In addition, since both the upper surface and the lower side of the cooling plate 310 are used to cool the battery module 100, the cooling efficiency may be improved.

FIG. 12 is a drawing showing a vehicle including the battery pack according to each embodiment of the present disclosure.

Referring to FIG. 12, the vehicle 20 according to an embodiment of the present disclosure may include one or more battery packs 10 according to each embodiment of the present disclosure. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a battery module having a plurality of battery cells;
a pack case configured to accommodate the plurality of battery modules; and
a cooling member accommodated in the pack case and configured to contact the plurality of battery modules,
wherein some of the plurality of battery modules are in contact with one surface of the cooling member, and the remainder of the plurality of battery modules are in contact with the other surface of the cooling member.

2. The battery pack according to claim 1,
wherein the cooling member includes:
a cooling plate with which the plurality of battery modules are in contact; and
a cooling medium flow path formed at an inner side of the cooling plate.

3. The battery pack according to claim 2,
wherein some of the plurality of battery modules are coupled to an upper surface of the cooling plate, and the remaining battery modules are coupled to a lower surface of the cooling plate.

4. The battery pack according to claim 1,
wherein the battery module includes a module case in which the plurality of battery cells are accommodated,
wherein the module case includes an upper module case and a lower module case, and
wherein the lower module case is larger than the upper module case.

5. The battery pack according to claim 4,
wherein the lower module case has a protrusion that protrudes further in at least one of right and left directions than the upper module case,
wherein the protrusion has a first coupling hole in which a fastening member is coupled, and
wherein the cooling member has a second coupling hole formed at a position corresponding to the first coupling hole.

6. The battery pack according to claim 1,
wherein the cooling member has a partition wall configured to partition the battery modules, and
wherein each of the plurality of battery modules is disposed inside the partition wall and is in contact with the cooling member.

7. The battery pack according to claim 6,
wherein the partition wall includes an upper partition wall formed at an upper side of the cooling member and a lower partition wall formed at a lower side of the cooling member.

8. The battery pack according to claim 6,
wherein the partition wall is formed to protrude from the cooling member,
wherein the partition wall includes a first partition wall and a second partition wall positioned adjacent to the first partition wall, and
wherein one battery module among the plurality of battery modules is arranged between the first partition wall and the second partition wall.

9. The battery pack according to claim 8,
wherein the battery module is interposed and coupled between the first partition wall and the second partition wall, and the first partition wall and the second partition wall are configured to guide movement of the battery module.

10. The battery pack according to claim 6,
wherein the battery module includes a module case in which the plurality of battery cells are accommodated,
wherein the module case includes an upper module case and a lower module case,
wherein the lower module case has a protrusion formed to protrude further in at least one of right and left directions than the upper module case, and
wherein the protrusion is welded in contact with the partition wall.

11. The battery pack according to claim 7,
wherein among the plurality of battery modules, a battery module disposed between the upper partition walls and a battery module disposed between the lower partition walls are disposed symmetrically to each other.

12. The battery pack according to claim 6,
wherein the battery module includes a module case in which the plurality of battery cells are accommodated,
wherein the module case includes an upper module case and a lower module case,
wherein the lower module case has a protrusion formed to protrude further in at least one of right and left directions than the upper module case, and
wherein the partition wall has a guide groove or a guide projection formed along the partition wall, and the protrusion has a guide projection or a guide groove formed to correspond to the guide groove or the guide projection so as to be coupled to and slide along the guide groove or the guide projection of the partition wall.

13. The battery pack according to claim 2,
wherein the cooling medium flow path includes an inlet and an outlet, and
wherein the inlet and the outlet are formed at opposite sides of the cooling plate.

14. The battery pack according to claim 13,
wherein the cooling member has a partition wall formed to partition the battery modules,
wherein each of the plurality of battery modules is disposed inside the partition wall to contact the cooling member, and
wherein the inlet and the outlet are formed in the partition wall.

15. The battery pack according to claim 14,
wherein the cooling medium flow path includes:
a first flow path disposed inside the partition wall along the partition wall; and
a second flow path extending from the first flow path toward the battery cell.

16. A vehicle comprising the battery pack according to any one of claims 1 to 15.
